# EUROPÄISCHE PATENTSCHRIFT

(11) **EP 0 771 702 B1**
(45) Veröffentlichungstag und Bekanntmachung des Hinweises auf die Patenterteilung: **15.03.2000**
(21) Anmeldenummer: 96116590.9
(22) Anmeldetag: 16.10.1996
(51) Int. Cl.: B60R 22/44

(54) **Federangetriebener Aufroller für Sicherheitsgurte**
Spring driven retractor for safety belts
Rétracteur actionné par ressort pour ceintures de sécurité

(30) Priorität: 31.10.1995 DE 19540627
(43) Veröffentlichungstag der Anmeldung: 07.05.1997
(73) Patentinhaber: TAKATA (EUROPE) VEHICLE SAFETY TECHNOLOGY GmbH, D-89081 Ulm (DE)
(72) Erfinder: Kitai, Kitaro, Co. Down, Northern Ireland BT18 0LW (GB); Pleyer, Matthias, 89250 Senden (DE)
(74) Vertreter: Manitz, Gerhart, Dr.

(56) Entgegenhaltungen:
- DE-A- 4 225 073
- DE-A- 4 241 730
- DE-A- 4 409 009

## Beschreibung

Die Erfindung betrifft einen federangetriebenen Aufroller für Sicherheitsgurte nach dem Oberbegriff des Patentanspruchs 1 sowie ein Verfahren zur Montage eines federangetriebenen Aufrollers für Sicherheitsgurte nach dem Patentanspruch 9.

Ein derartiger federangetriebener Gurtaufroller mit zwei sich in entgegengesetzter Richtung verjüngenden Fadenrollen und einen darauf aufgewikkelten Faden ist aus der DE-A-42 41 730 bekannt. Ein derartiger Gurt-roller weist den Vorteil auf, daß die Gurtauszugskraft in Abhängigkeit von der Auszugslänge in einer gewünschten Weise konstant gehalten oder auch reduziert werden kann.

Hierdurch wird der Anlegekomfort für die Fahrzeuginsassen wesentlich gesteigert, weil die Rückzugskraft im Anlegezustand stark reduziert ist. Wenn jedoch der Gurt nach dem Ablegen aufgerollt werden soll, nimmt die Einzugskraft in gewünschter Weise zu, so daß ein sicheres Einziehen des Sicherheitsgurtes gewährleistet ist.

Die vorliegende Erfindung hat das Ziel, einen federangetriebenen Aufroller der eingangs genannten Gattung weiter zu verbessern. Insbesondere sollen die Massenträgheitskräfte reduziert werden. Weiter sollen die Leichtgängigkeit erhöht und die Montage erleichtert werden.

Zur Lösung dieser Aufgabe sind die Merkmale des kennzeichnenden Teiles des Anspruches 1 vorgesehen.

Dadurch, daß die äußeren Bereiche der Spiralfederanordnung durch Verbindung mit dem unbeweglichen Gehäuse sich gar nicht oder nur wenig bewegen und die Federbewegung beim Ausziehen des Sicherheitsgurtes im wesentlichen im radial inneren Bereich der Spiralfederanordnung stattfindet, werden die beim Ein- und Ausziehen des Sicherheitsgurtes bewegten Massen der Spiralfeder wesentlich herabgesetzt. Hierbei ist zu berücksichtigen, daß die Fadenrollen bei jedem Anlegen und Ablegen des Sicherheitsgurtes betätigt werden, so daß im Verlauf der Lebenszeit eines Fahrzeuges Tausende von Ein- und Auszugsbewegungen der Fadenrollen sowie der Spiralfederanordnung erfolgen.

Aufgrund der Weiterbildung nach Anspruch 2 oder 3 wird die Montage wesentlich erleichtert, weil das Federgehäuse mit der Spiralfederanordnung und ggf. einem Deckel auf dem Federgehäuse zunächst separat hergestellt werden können, um dann als Einheit in das Konusgehäuse eingebaut zu werden.

Besonders vorteilhaft ist nach Anspruch 4 das Anbringen einer Federkernwelle im Federgehäuse, weil hierdurch eine komplett funktionsfähige Federanordnung zur Verfügung gestellt wird, wobei durch entsprechendes Verdrehen der Federkernwelle relativ zum Federgehäuse die Spiralfederanordnung auch bereits von vorneherein in ihren vollen Spannungszustand überführt werden kann.

Besonders bevorzugt wird die Erfindung bei einem Aufroller nach der DE-OS 195 18 772 angewendet. In diesem Fall soll das Federgehäuse in sprungartig erweiterten hohlen Kegelstumpfbereich oder auch in einem hohlen Zylinderbereich untergebracht sein, wie das im Anspruch 5 oder 6 definiert ist. Die Drehlagerung der zweiten Fadenrolle soll vorzugsweise im hohlen Konusbereich kleineren mittleren Durchmessers erfolgen.

Damit der Faden bei der Montage sicher in die Führungsrillen eingebracht wird, ist zweckmäßigerweise eine in geeigneter Weise bewegbare Fadenführungslehre vorgesehen.

Eine weitere Ausführungsform entnimmt man dem Anspruch 7. Durch die entsprechende Verjüngungsrichtung der beiden Fadenrollen wird die Montage wesentlich erleichtert und der notwendige Bauraum wesentlich reduziert.

Insbesondere kann diese Ausführungsform gemäß Anspruch 8 weitergebildet werden, wodurch das Drehsicherungselement versenkt untergebracht werden kann, was für die Aufbewahrung und den Versand der erfindungsgemäßen Aufroller wichtig ist.

Besonders vorteilhafte Verfahren zur Montage eines federangetriebenen Aufrollers gemäß vorliegender Erfindung sind in den Ansprüchen 9 bis 13 definiert.

Die Erfindung wird im folgenden beispielsweise anhand der Zeichnung beschrieben; in dieser zeigt
- Figur 1: eine teilweise geschnittene Ansicht eines erfindungsgemäßen federangetriebenen Aufrollers für Sicherheitsgurte im annähernd voll ausgezogenen Zustand des Sicherheitsgurtes und
- Figur 2: eine Schnittansicht nach Linie II-II in Figur 1.

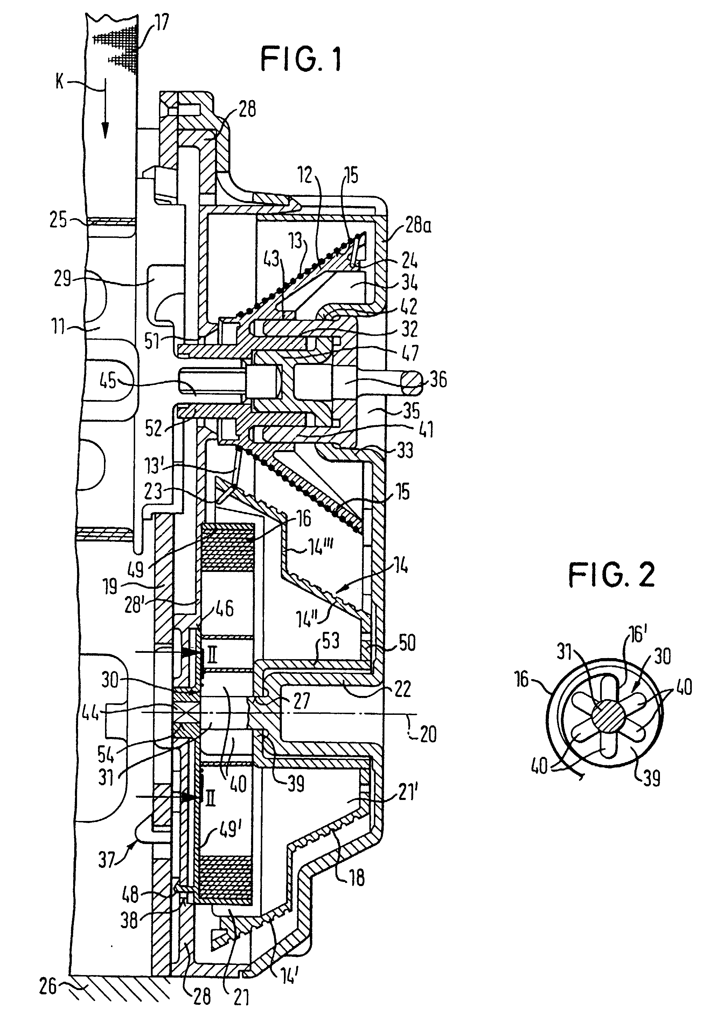

Nach Fig. 1 weist ein erfindungsgemäßer Gurtaufroller eine mit einer Gurtauszugssperre 29 zusammenwirkende Gurtrolle 11 auf, auf die ein nur mit einem kurzen Stück angedeuteter Sicherheitsgurt 17 zu einem Gurtwickel 25 aufwickelbar ist.

Die Gurtrolle 11 ist in einem Aufrollerrahmen 19 gelagert, welcher am Fahrzeugchassis 26 befestigt ist und an dem durch eine Schnappverbindung 37 eine Aufrollergrundplatte 28 angebracht ist, die mit einem auf der von der Gurtrolle 11 abgewandten Seite aufgebrachten Deckel 28a ein Aufrollergehäuse bildet. Die Gurtauszugssperre 29, von der in Fig. 1 lediglich der Aufnahmeraum dargestellt ist, verhindert bei unfallbedingten Beschleunigungen ein weiteres Ausziehen des Sicherheitsgurtes 17. Auf einem sich durch eine Bohrung 51 der Grundplatte 28 erstreckenden, unrunden Zapfen 45 der Gurtrolle 11 ist innerhalb des Gehäuses 28, 28a koaxial eine komplementäre Buchse 52 einer konisch ausgebildeten, sich von der Gurtrolle 11 wegerstreckenden Fadenrolle 12 axial aufgesetzt und auf diese Weise drehfest angekuppelt, welche auf einem deckelfesten Lagervorsprung 47 drehgelagert und auf ihrem Umfang mit einer wendelförmigen Führungsrille 15 versehen ist.

Neben der Fadenrolle 12 ist mit parallel zum Zapfen 45 verlaufender Achse 20 und seitlich ausgerichtet eine zweite Fadenrolle 14 vorgesehen, welche gegenläufig zu der ersten Fadenrolle 12 konisch verläuft und welche einen hohlen Kegelstumpfbereich 14' größeren mittleren Durchmessers sowie einen hohlen Konusbereich 14'' kleineren mittleren Durchmessers aufweist. Die beiden Bereiche 14', 14'' gehen über eine Ringstufe 14''' ineinander über, die eine nicht gezeigte Übergangsrille trägt, wie sie im einzelnen der DE-OS 195 18 772 zu entnehmen ist. Auch die zweite Fadenrolle 14 weist auf ihrem Umfang eine wendelförmige Führungsrille 18 auf und sitzt bei 27 drehbar auf einem sich vom Deckel 28a in Richtung zum Inneren des Gehäuses 28, 28a erstreckenden gehäusefesten Hohlzapfen 22, der parallel zum Zapfen 45 verläuft und relativ zu ihr nach unten versetzt ist.

Die zweite Fadenrolle 14 enthält im Kegelstumpfbereich 14' einen in Richtung der Gurtrolle 11 offenen Hohlraum 21, in dem ein mittels Schnapphaken 48 in Öffnungen 38 der Grundplatte 28 gehäusefest gehaltenes Federgehäuse 49 untergebracht ist, welches im wesentlichen topfartig mit kreiszylindrischer Wandung ausgebildet ist und eine Spiralfederanordnung 16 enthält, die radial außen am Federgehäuse 49 drehfest gehalten ist und radial innen mit einer mit der Achse 20 der Fadenrolle 14 koaxiale, hohle Federkernlager 30 in drehfester Verbindung steht, welches mit der koaxial dazu angeordneten zweiten Fadenrolle 14 über eine Ringplatte 39 und eine dem Zapfen 22 mit geringem Abstand umgebende Traghülse 53 vorzugsweise einstückig verbunden ist. Die Traghülse 53 springt vom Boden 50 der zweiten Fadenrolle 14 in Richtung auf das Federgehäuse 49 vor. Die Zentralöffnung der Ringplatte 39 sitzt auf einer schaftartigen Verlängerung 31 des Hohlzapfens 22 und trägt zur Drehlagerung 27 bei. Das Federkernlager 30 besteht aus mehreren, insbesondere sechs über den Umfang gleichmäßig verteilten Lamellen 40, die axial von der Ringplatte 39 vorspringen und drehbar auf der Verlängerung 31 sitzen. An den vom Hohlzapfen 22 abgewandten Ende der Verlängerung 31 ist ein Vierkant 44 vorgesehen, der zur Schaffung einer drehfesten Verbindung zwischen dem Deckel 28a (über 22, 31) und dem Federgehäuse 49 in einer komplementären Zentralvierkantöffnung 54 eines senkrecht zur Drehachse 20 verlaufenden Plattenteils 49' des Federgehäuses sitzt. Rund um die Traghülse 53 ist ein Hohlraum 21' des Konusbereiches 14'' verringerten mittleren Durchmessers vorgesehen.

Von einer Befestigunsstelle 24 im erweiterten Endbereich der ersten Fadenrolle 12 aus ist ein Faden 13 in die Führungsrille 15 der Fadenrolle 12 gewickelt und erstreckt sich vom verjüngten Endbereich der Fadenrolle 12 über ein geradlinig gespanntes Stück 13' in die Führungsrille 18 der zweiten Fadenrolle 14, wo das andere Fadenende bei 23 am erweiterten Endbereich der zweiten Fadenrolle 14 befestigt ist.

Der Deckel 28a weist im Bereich der ersten Fadenrolle 12 zentral zu dieser eine zurückspringende Wand 33 auf, die in einen Hohlraum 34 der Fadenrolle 12 eingreift, wodurch außen ein Aufnahmeraum 35 für ein Drehsicherungselement 36 geschaffen wird, das einen oder mehrere axiale Steckzapfen 41 aufweist, die Bohrungen 42 in der zurückspringenden Wand 33 durchgreifen und jeweils in eine axiale Sackbohrung 43 der ersten Fadenrolle 12 eingreifen, wodurch bei Spannung der Spiralfederanordnung 16 eine Sicherung der Fadenrolle 12 gegen eine Drehung in Abwickelrichtung des Fadens 13 geschaffen wird.

Die Spiralfederanordnung 16 überträgt auf die Fadenrolle 14 ein Drehmoment, welches den in ihre Führungsrille 18 eingelegten Faden 13 aufzuwickeln trachtet, was zu einer Abwicklung des auf der Fadenrolle 12 befindlichen Fadenstückes von der Fadenrolle 12 führt.

In der aus Fig. 1 ersichtlichen Wickelposition ist der Faden 13 weitgehend vollständig auf die erste Fadenrolle 12 aufgewickelt und weitgehend vollständig von der zweiten Fadenrolle 14 abgewickelt. In diesem Zustand weist der Gurtwickel 25 auf der Gurtrolle 11 den geringsten Durchmesser auf, d.h., daß sich nunmehr eine minimale Gurtlänge auf der Gurtrolle 11 befindet und der Gurt 17 seine größte Auszugslänge erreicht hat.

Durch die Spiralfederanordnung 16 wird die Fadenrolle 14 in Fadenaufwickelrichtung und die erste Fadenrolle 12 in Fadenabwickelrichtung belastet bzw. gedreht, so daß beim Loslassen des ausgezogenen Sicherheitsgurtes 17 der Faden 13 mehr und mehr von der ersten Fadenrolle 12 ab und auf die zweite Fadenrolle 14 aufgewickelt wird.

Die Montage der beschriebenen Anordnung geht wie folgt vor sich:

Zunächst wird der abgenommene Deckel 28a vorzugsweise mit der Innenseite nach oben in eine nicht dargestellte Montagevorrichtung eingelegt.

Anschließend wird die Fadenrolle 12 mit dem bereits bei 24 befestigten Faden 13 auf den Lagervorsprung 47 des Deckels 28a aufgebracht und anschließend der Faden durch Drehen der Fadenrolle 12 in die Führungsrille 15 eingelegt, bis die Fadenrolle 12 vollgewickelt ist.

Anschließend wird dann die zweite Fadenrolle 14 auf die schaftartige Verlängerung 31 des deckelfesten Hohlzapfens 22 aufgesetzt, bis sie ebenfalls die aus Fig. 1 ersichtliche Relativposition zum Deckel 28a einnimmt.

Nunmehr wird das Federgehäuse 49 mit der bereits montierten Spiralfederanordnung 16 im noch ungespannten Zustand der Spiralfederanordnung 16 auf das Federkernlager 30 axial aufgeschoben, wobei sich das abgebogene, radial innere Ende 16' der Spiralfederanordnung 16 zwischen einen der peripheren Zwischenräume zwischen den Lamellen 40 gemäß Fig. 2 axial einschiebt. Gleichzeitig setzt sich die Vierkantöffnung 54 auf den Vierkant 44, um eine drehfeste Verbindung zwischen dem Deckel 28a und dem Federgehäuse 49 herzustellen. Sollte das Ende 16' sich beim Montieren nicht in axialer Ausrichtung mit einem der Zwischenräume zwischen den Lamellen 40 befinden oder sollte die Vierkantöffnung 54 mit dem Vierkant 44 noch nicht passend ausgerichtet sein, kann die Ausrichtung durch leichtes Verdrehen des Federgehäuses 49 und/oder der Fadenrolle 14 herbeigeführt werden.

Nach dem Aufsetzen des Federgehäuses 49 auf das Federkernlager 30 befindet sich die Spiralfederanordnung 16, die radial außen drehfest mit der Umfangswand des Federgehäuses 49 verbunden ist, in drehfestem Eingriff mit der Fadenrolle 14.

Nunmehr wird die zweite Fadenrolle 14 in Federspannrichtung solange gedreht, bis die Spiralfederanordnung 16 ihren maximalen Spannungszustand erreicht hat. Dann wird das freie Ende des auf die erste Fadenrolle 12 aufgewickelten Fadens 13 bei 23 an der zweiten Fadenrolle 14 befestigt.

Zuvor oder anschließend wird das Drehsicherungselement 36 in die aus Fig. 1 ersichtliche Drehsperrposition gebracht, wodurch eine Drehung der Fadenrolle 12 verhindert wird.

Wird jetzt die durch ein geeignetes Werkzeug gespannte Spiralfederanordnung 16 freigegeben, so kann diese ihr Antriebsdrehmoment auf die zweite Fadenrolle 14 übertragen und den Faden 13 dabei so spannen, daß zwischen den Fadenrollen 12, 14 das gespannte geradlinige Fadenstück 13' vorliegt. Eine weitere Drehung der Fadenrollen 12, 14 ist durch das Drehsicherungselement 36 verhindert.

Anschließend wird auf den Deckel 28a die Grundplatte 28 axial aufgesetzt, wobei die Öffnungen 38 über die Schnapphaken 48 gleiten und die Schnapphaken 48 hinter die Grundplatte 28 greifen, um auf diese Weise das Federgehäuse 49 fest und insbesondere drehfest mit der Grundplatte 28 zu verbinden. Dabei bleibt die Vierkantöffnung 54 des Plattenteils 49' des Federgehäuses 49 in drehfester Verbindung mit dem Vierkant 44, um so auch die für die Montage herbeigeführte drehfeste Verbindung mit dem Deckel 28a beizubehalten.

In diesem Zustand kann das fertig montierte Aufrollergehäuse 28, 28a transportiert und gelagert werden.

Beim Zusammenbau mit einem Gurtaufroller wird die Grundplatte 28 in der aus Fig. 1 ersichtlichen Weise axial auf den Aufrollerrahmen 19 aufgesetzt, wobei es zu einem Eindringen des Zapfens 45 der Gurtrolle 11 in die Buchse 52 der zweiten Fadenrolle 12 kommt und so eine drehfeste Verbindung zwischen der Gurtrolle 11 und der ersten Fadenrolle 12 hergestellt wird. Weiter kommt es bei 37 zu der vorgesehenen Schnappverbindung zwischen dem Aufrollergehäuse 28, 28a und dem Aufrollerrahmen 19. Falls erwünscht, können an geeigneten Stellen mehrere Schnappverbindungen 37 vorgesehen werden.

Auf der in Fig. 1 rechten Seite ist das Federgehäuse 49 durch die zweite Fadenrolle 14 abgeschlossen.

Auf der der Gurtrolle 11 zugewandten Seite weist das Federgehäuse 49 eine sektorförmige Öffnung 46 auf, in welche das Plattenteil 49' der Grundplatte 28 eingreift.

Auch andere Montagemöglichkeiten sind denkbar. So kann nach einer weiteren Ausführungsform die Montage wie folgt vor sich gehen:

Zunächst wird in aus dem Aufrollergehäuse 28, 28a herausgenommenen Zustand in das Federgehäuse 49 von der offenen Seite her axial die Spiralfeder 16 eingesetzt und an ihrem Umfang am Federgehäuse 49 beispielsweise durch Verklipsen festgelegt. In diesem Zustand wird das Federgehäuse 49 in Fig. 1 von rechts axial auf die Aufrollergrundplatte 28 aufgesetzt und entweder durch Einfügen sowie Einschnappen der Schnapphaken 48 in die Öffnungen 38 der Aufrollergrundplatte 28 oder auf andere Weise axial und im Umfangsrichtung an der Aufrollergrundplatte 28 festgelegt.

Grundsätzlich könnte das Federgehäuse 49 auch ein fester, integraler Bestandteil der Aufrollergrundplatte 28 sein, wobei lediglich eine geeignete Stirnöffnung auf der einen oder anderen Axialseite vorgesehen sein müßte, um die Spiralfeder 16 in das Federgehäuse 49 einbringen und außen am Gehäuse 28, 28a sowie innen an dem Federkernlager 30 drehfest anbringen zu können. Es ist lediglich erforderlich, daß das Federgehäuse 49 so angeordnet ist, daß nach dem Einbringen und Befestigen der Spiralfeder 16 noch die zweite Fadenrolle 14 in der im folgenden beschriebenen Weise aufgebracht werden kann.

Anschließend wird die zweite Fadenrolle 14 - noch ohne aufgewickelten Faden 13 - in Fig. 1 von rechts aufgesetzt, wobei die Lamellen 40 in die Zentralöffnung der Spiralfeder 16 eindringen und das Federende 16' sich in der aus Fig. 2 ersichtlichen Weise zwischen zwei benachbarte Lamellen 40 legt. Nunmehr wird mittels eines geeigneten Drehwerkzeuges das Federkernlager 30 in Spannrichtung der Spiralfeder 16 solange gedreht wird, bis die Spiralfeder 16 maximal gespannt ist. Am zweckmäßigsten erfolgt die Drehung des Federkernlagers 30 dadurch, daß das Drehwerkzeug an geeigneter Stelle, beispielsweise am größten Umfang der zweiten Fadenrolle 14 angreift.

Jetzt wird ein bei 23 an der zweiten Fadenrolle 14 befestigter Faden 13 durch stetiges Entspannen der Spiralfeder 16 auf den Umfang der zweiten Fadenrolle 14 in die Führungsrillen 18 gewickelt, wobei mittels einer geeigneten Fadenführungslehre eine solche Führung des gespannten Fadens vorgenommen wird, daß dieser sich sauber in die Führungsrille 18 hineinlegt.

Wenn die Bereiche 14' und 14'' mit dem Faden 13 vollgewickelt sind, soll die Spiralfeder 16 noch eine solche Restspannung aufweisen, wie sie für das Gespannthalten des Fadens 13 im Betrieb erforderlich ist.

Nunmehr wird das Ende des auf der Fadenrolle 14 befindlichen Fadenwickels in geeigneter Weise beispielsweise mittels der Fadenführungslehre fixiert und die Fadenrolle in der erreichten Position festgehalten.

Das freie Ende des Fadens 13 wird jetzt an der zwischenzeitlich in die Bohrung 51 eingesetzten Fadenrolle 12 bei 24 befestigt. Anschließend wird der Deckel 28a aufgesetzt und am Aufrollergrundrahmen 28 befestigt. Jetzt wird die Fadenrolle 12 durch ein geeignetes Werkzeug so in Drehung versetzt, daß der Faden 13 unter entsprechender Drehung der zweiten Fadenrolle 14 von letzterer ab- und auf die Fadenrolle 12 sukzessive aufgewickelt wird, bis letztere in der aus Fig. 1 ersichtlichen Weise mit dem Faden 13 vollgewickelt ist. In diesem Zustand ist die Spiralfeder 16 wieder voll gespannt. Dies ist der Zustand, in dem das Aufrollergehäuse 28 mit der Gurtrolle 11 zusammenzubauen ist.

Um nun die so gespannte Position der Anordnung aus erster Fadenrolle 12 und zweiter Fadenrolle 14 während des Transports und der Lagerung bis zum Zusammenbau mit der Gurtrolle 11 aufrechtzuerhalten, werden die Steckzapfen 41 des Drehsicherungselementes 36 durch die Bohrungen 42 des zurückgesetzten Wandteiles 33 hindurch in die Sacklöcher 43 der ersten Fadenrolle 12 eingesteckt. Nunmehr ist die erste Fadenrolle 12 drehgesichert und die gespannte Position beiden Fadenrollen 12, 14 sowie des Fadens 13 bleibt fixiert, bis nach dem Zusammenbau mit der Gurtrolle 11 das Drehsicherungselement 36 wieder axial abgezogen wird.

Die Anordnung der Fadenrollen 12, 14 nach Figur 1 in der Weise, daß die erste Fadenrolle 12 sich von der Gurtrolle 12 ausgesehen erweitert und die zweite Fadenrolle 14 verjüngt, bringt den Vorteil, daß auf diese Weise der Hohlraum 21, 21' der zweiten Fadenrolle 14 für die Aufnahme des Federgehäuses 49 und der Traghülse 53 zur Verfügung steht, während im Hohlraum 34 der ersten Fadenrolle 12 die rückspringende Wand 33 des Deckels 28a mit dem Lagervorsprung 47 und der Lagerhülse 32 der ersten Fadenrolle 12 aufgenommen werden kann. Außerdem ist so der Bauraum wesentlich reduziert.

Eine weitere Art der Montage geht wie folgt vor sich:

Zunächst wird das eine Ende des Fadens bei 24 an der in die Öffnung 51 eingesetzten ersten Fadenrolle 12 befestigt und der Faden dann vollständig auf die Fadenrolle 12 aufgewickelt. Dann wird das andere Fadenende an der Fadenrolle 14 bei 23 befestigt. In diesem Zustand wird die Fadenrolle 14 auf die Aufrollergrundplatte 28 axial aufgesetzt, wo sich bereits das Federgehäuse 49 mit der voll gespannten Spiralfeder 16 befinden möge. Sobald die drehfeste Verbindung zwischen dem radial inneren Ende 16' der Spiralfeder 16 und dem Federkernlager 30 hergestellt ist, wird unter Festhaltung der gespannten Feder über den Vierkant 44 der Deckel 28a aufgesetzt und an der Grundplatte 28 befestigt. Nunmehr wird das Drehsicherungselement 36 zur Drehsicherung der ersten Fadenrolle 12 eingesetzt und die über den Vierkant 44 aufgebrachte Spannkraft für die Spiralfeder 16 entfernt, worauf die Spiralfeder 16 das entsprechende Drehmoment auf die zweite Fadenrolle 14, den Faden und die erste Fadenrolle 12 übertragen kann, welche jedoch durch das Drehsicherungselement 36 drehgesichert ist. In diesem Zustand kann dann die gesamte Anordnung gelagert und bis zum Zusammenbau mit einer Gurtrolle 11 transportiert werden.

## Patentansprüche

1. Federangetriebener Aufroller für Sicherheitsgurte (17) bei Kraftfahrzeugen mit einem Aufrollergehäuse (28, 28a) und einer eine Gurtauszugssperre (29) aufweisenden Gurtrolle (11), die drehfest, inbesondere koaxial und direkt mit einer ersten, sich in einer Axialrichtung verjüngenden Fadenrolle (12) mit einer wendelförmigen Führungsrille (15) auf ihrem Umfang verbunden ist, welche über eine entgegen dem Wickelsinn des Sicherheitsgurtes (17) auf der Gurtrolle (11) in die Führungsrille (15) gewickelten, mit einem Ende an der Fadenrolle (12) befestigten flexiblen Faden (13) drehfest mit einer weiteren, parallel und in seitlicher Ausrichtung angeordneten, zweiten sich in entgegengesetzter Axialrichtung verjüngenden Fadenrolle (14) mit einer wendelförmigen Führungsrille (18) verbunden ist, an der das andere Ende des Fadens (13) befestigt und in deren Führungsrille (18) der Faden (13) aufgewickelt ist und die durch eine Spiralfederanordnung (16) in Aufwickelrichtung des Fadens (13) auf der zweiten Fadenrolle (14) und des Sicherheitsgurtes (17) auf der Gurtrolle (11) vorgespannt ist, wobei die beiden Führungsrillen (15, 18) derart ausgebildet und auf den Fadenrollen (12, 14) angeordnet sind, daß das die beiden Fadenrollen (12, 14) verbindende gespannte Fadenstück (13') zumindest im wesentlichen knickfrei in beide auf den Fadenrollen (12, 14) befindlichen Fadenstücke übergeht und wobei die Spiralfederanordnung (16) zumindest teilweise in einem Hohlraum (21) der zweiten Fadenrolle (14) untergebracht ist, welcher zumindest teilweise von der Führungsrille (18) umgeben ist,
dadurch **gekennzeichnet,**
daß die Spiralfederanordnung (16) radial außen mit dem Aufrollergehäuse (28, 28a) und radial innen mit der zweiten Fadenrolle (14) drehfest verbunden ist.

2. Aufroller nach Anspruch 1,
dadurch **gekennzeichnet,**
daß die Spiralfederanordnung (16) in einem eigenen Federgehäuse (49) untergebracht ist.

3. Aufroller nach Anspruch 2,
dadurch **gekennzeichnet,**
daß das Federgehäuse (49) axial in das Aufrollergehäuse (28, 28a) einsetzbar und an diesem befestigbar ist.

4. Aufroller nach Anspruch 2 oder 3,
dadurch **gekennzeichnet,**
daß im Federgehäuse (49) zentral ein Federkernlager (30) drehbar angeordnet ist, an dem das radial innere Ende (16') der Spiralfederanordnung (16) drehfest angebracht ist und welches beim Einsetzen des Federgehäuses (49) in das Aufrollergehäuse (28) oder beim axialen Anbringen der zweiten Fadenrolle (14) mit letzterer drehfest kuppelbar ist oder mit der zweiten Fadenrolle (14) fest verbunden, insbesondere einstückig ist, in welchem Fall das radial innere Ende (16') der Spiralfederanordnung (16) lösbar mit dem Federkernlager (30) verbindbar ist.

5. Aufroller nach einem der vorhergehenden Ansprüche, wobei die zweite Fadenrolle (14) einen hohlen Kegelstumpfbereich (14') größeren mittleren Durchmessers aufweist, der an seinem den kleineren Durchmesser aufweisenden Ende sprungartig in einen Konusbereich (14") kleineren mittleren Durchmessers übergeht,
dadurch **gekennzeichnet,**
daß das Federgehäuse (49) sich lediglich im Innern des Kegelstumpfbereichs (14') größeren mittleren Durchmessers befindet.

6. Aufroller nach Anspruch 5,
dadurch **gekennzeichnet,**
daß Lagermittel (22, 31) für die zweite Fadenrolle (14) sich axial durch den Konusbereich (14") kleineren mittleren Durchmessers bis in den hohlen Kegelstumpfbereich (14') größeren mittleren Durchmessers erstrecken.

7. Aufroller nach einem der vorhergehenden Ansprüche,
dadurch **gekennzeichnet,**
daß die erste Fadenrolle (12) sich zur Gurtrolle (11) hin und die zweiten Fadenrolle (14) sich von der Gurtrolle (11) weg verjüngt.

8. Aufroller nach Anspruch 7,
dadurch **gekennzeichnet,**
daß die erste Fadenrolle (12) hohl ausgebildet ist und die Wand (33) des Aufrollergehäuses (28) axial in den so gebildeten Hohlraum (34) zurückspringt, derart, daß außen ein Aufnahmeraum (35) für ein Drehsicherungselement (36) geschaffen wird und/oder an der Wand (33) der Lagervorsprung (47) für die Drehlagerung der ersten Fadenrolle (12) angeordnet ist.

9. Verfahren zur Montage eines federangetriebenen Aufrollers für Sicherheitsgurte (17) bei Kraftfahrzeugen mit einem Aufrollergehäuse (28, 28a) und einer eine Gurtauszugssperre (29) aufweisenden Gurtrolle (11), die drehfest, inbesondere koaxial und direkt mit einer ersten, sich in einer Axialrichtung verjüngenden Fadenrolle (12) mit einer wendelförmigen Führungsrille (15) auf ihrem Umfang verbunden ist, welche über eine entgegen dem Wickelsinn des Sicherheitsgurtes (17) auf der Gurtrolle (11) in die Führungsrille (15) gewickelten, mit einem Ende an der Fadenrolle (12) befestigten flexiblen Faden (13) drehfest mit einer weiteren, parallel und in seitlicher Ausrichtung angeordneten, zweiten sich in entgegengesetzter Axialrichtung verjüngenden Fadenrolle (14) mit einer wendelförmigen Führungsrille (18) verbunden ist, an der das andere Ende des Fadens (13) befestigt und in deren Führungsrille (18) der Faden (13) aufgewickelt ist und die durch eine Spiralfederanordnung (16) in Aufwickelrichtung des Fadens (13) auf der zweiten Fadenrolle (14) und des Sicherheitsgurtes (17) auf der Gurtrolle (11) vorgespannt ist, wobei die beiden Führungsrillen (15, 18) derart ausgebildet und auf den Fadenrollen (12, 14) angeordnet sind, daß das die beiden Fadenrollen (12, 14) verbindende gespannte Fadenstück (13') zumindest im wesentlichen knickfrei in beide auf den Fadenrollen (12, 14) befindlichen Fadenstücke übergeht und wobei die Spiralfederanordnung (16) wenigstens teilweise in einem Hohlraum (21) der zweiten Fadenrolle (14) untergebracht ist, welcher zumindest teilweise von der Führungsrille (18) umgeben ist,
dadurch **gekennzeichnet,**
daß
- die Spiralfederanordnung (16) in ein Federgehäuse (49) eingebracht und radial außen an diesem befestigt wird, daß
- ein Federkernlager (30) radial innen in die Spiralfederanordnung (16) eingebracht und mit dieser drehfest verbunden wird, daß
- das Federkernlager (30) in Federspannungsrichtung solange gedreht wird, bis die Spiralfederanordnung (16) maximal gespannt ist, daß
- die die Spiralfederanordnung (16) gespannt haltende Kraft entfernt wird, nachdem die Fadenrollen (12, 14) sich mit dem darauf aufgewickelten und befestigten Faden (13) im Aufrollergehäuse (28, 28a) befinden, und
- das fertiggestellte Aufrollergehäuse (28, 28a) am Aufrollerrahmen (19) angebracht wird.

10. Verfahren nach Anspruch 9,
dadurch **gekennzeichnet,**
daß das fertiggestellte Aufrollergehäuse (28, 28a) am Aufrollerrahmen (19) aufgeklipst wird.

11. Verfahren nach Anspruch 9 oder 10,
dadurch **gekennzeichnet,**
- daß ein Deckel (28a) des Aufrollergehäuses (28, 28a) mit seiner Innenseite in eine Montagevorrichtung eingelegt wird,
- die erste Fadenrolle (12) mit daran befestigtem Faden (13) auf ihr Drehlager (47) im Deckel aufgesetzt wird,
- der Faden (13) in die Führungsrille (15) der ersten Fadenrolle (12) gewickelt wird, bis die Fadenrolle (12) voll mit dem Faden (13) bewickelt ist,
- die zweite Fadenrolle (14) auf ihr Drehlager (22, 31) im Deckel (28a) aufgebracht wird,
- das Federgehäuse (49) mit bereits montierter aber noch nicht gespannter Spiralfederanordnung (16) auf das fest mit der zweiten Fadenrolle (14) verbundene Federkernlager (30) der zweiten Fadenrolle (14) aufgebracht und drehfest mit dem Aufrollergehäuse (28, 28a) verbunden wird, indem eine unrunde, zentrale Öffnung (44) des Federgehäuses (49) sich auf einen komplementären Vorsprung (44) an einer das hohle Federkernlager (30) durchgreifenden schaftartigen Verlängerung (31) eines deckelfesten Hohlzapfens (22) drehfest setzt,
- die Spiralfederanordnung (16) durch entsprechende Drehung der zweiten Fadenrolle (14) maximal gespannt wird,
- das zweite Fadenende an der Fadenrolle (14) befestigt wird,
- ein Drehsicherungselement (36) an der ersten Fadenrolle (12) angebracht wird und
- die Aufrollergrundplatte (28) auf den Deckel (28a) aufgebracht und mit diesem verbunden wird, worauf das Federgehäuse (49) mit der Grundplatte (28) verklipst wird, um eine sichere drehfeste Abstützung des Federgehäuses (49) auch unabhängig von der drehfesten Verbindung (44, 54) zwischen dem Deckel (28a) und dem Federgehäuse (49) zu schaffen.

12. Verfahren nach Anspruch 11,
dadurch **gekennzeichnet,**
daß
- die zweite Fadenrolle (14) und das Federgehäuse (49) axial zusammengeführt und die zweite Fadenrolle (14) und das Federkernlager (30) drehfest miteinander gekuppelt werden, daß
- die Spiralfeder (16) maximal vorgespannt wird, daß
- das eine Ende des Fadens (13) an der zweiten Fadenrolle (14) befestigt (23) wird, daß
- der Faden (13) unter Entspannung der Spiralfederanordnung (16) und unter Führung durch eine Fadenführungslehre in deren Führungsrille (18) auf die zweite Fadenrolle (14) gewikkelt wird, daß
- nach dem Vollwickeln der zweiten Fadenrolle (14) der Faden (13) an dieser durch die Fadenführungslehre fixiert und das andere Ende des Fadens (13) an der ersten Fadenrolle (12) befestigt (24) wird, daß
- der Faden von der zweiten Fadenrolle (14) ab- und auf die erste Fadenrolle (12) aufgewickelt wird, wobei die Spiralfederanordnung (16) erneut gespannt wird, und daß
- nach zumindest weitgehendem Bewickeln der ersten Fadenrolle (12) und weitgehender Spannung der Spiralfederanordnung (16) ein Drehsicherungselement (36) an der ersten Fadenrolle (12) angebracht wird.

13. Verfahren nach einem der Ansprüche 9 bis 11,
dadurch **gekennzeichnet,**
daß
- der Faden (13) an der ersten Fadenrolle (12) befestigt und auf diese aufgewickelt wird, daß
- das andere Fadenende anschließend an der zweiten Fadenrolle (14) befestigt wird, daß
- die zweite Fadenrolle (14) in diesem Zustand auf die gespannte Spiralfederanordnung (16) aufgesetzt wird, daß
- die Gesamtanordnung in einem Aufrollergehäuse (28, 28a) angeordnet wird, und daß
- ein Drehsicherungselement (36) an der ersten Fadenrolle (12) angebracht und die die Spiralfederanordnung (36) gespannt haltende Kraft entfernt wird.

## Claims

1. Spring driven reeling mechanism for safety belts (17) in motor vehicles, comprising a reeling mechanism housing (28, 28a) and a belt reel (11) having a belt pull-out blocking device (29), wherein the belt reel (11) is rotationally fixedly connected, in particular coaxially and directly connected, to a first thread reel (12) which tapers in the axial direction and has a spiral guide groove (15) at its periphery, wherein the thread reel (12) is rotationally fixedly connected via a flexible thread (13) secured at one end to the thread reel (12) and wound into the guide groove (15), contrary to the winding sense of the safety belt (17) on the belt reel (11) to a further, second thread reel (14) arranged parallel to it in lateral alignment, wherein the second thread reel tapers in the opposite axial direction and has a spiral guide groove (18), with the other end of the thread (13) being secured to the second thread reel, and with the thread being wound into the guide groove (18) of the second guide reel, wherein the second thread reel is biased by a spiral spring arrangement (16) in the winding up direction of the thread (13) onto the second thread reel (14) and of the safety belt (17) onto the belt reel (11), with the two guide grooves (15, 18) being so designed and arranged on the thread reels (12, 14) that the tensioned thread piece (13') connecting the two thread reels (12, 14) merges at least substantially kink-free into the two thread pieces located on the thread reels (12, 14), and wherein the spiral spring arrangement (16) is accommodated at least partially in a hollow cavity (21) of the second thread reel (14), with the cavity being at least partly surrounded by the guide groove (18), characterized in that the spiral spring arrangement (16) is rotationally fixedly connected radially outwardly to the reeling mechanism housing (28, 28a) and radially inwardly to the second thread reel (14).

2. Reeling mechanism in accordance with claim 1, characterized in that the spiral spring arrangement (16) is accommodated in its own spring housing (49).

3. Reeling mechanism in accordance with claim 2, characterized in that the spring housing is insertable axially into the reeling mechanism housing (28, 28a) and securable to the latter.

4. Reeling mechanism in accordance with claim 2 or claim 3, characterized in that a spring core bearing (30), on which the radially inner end (16') of the spiral spring arrangement (16) is rotationally fixedly mounted, is rotatably arranged centrally in the spring housing (49) and, on insertion of the spring housing (49) into the reeling mechanism housing (28), or on the axial placement of the second thread reel (14), can be rotationally fixedly coupled to the latter, or is fixedly connected to the second thread reel (14), in particular in one piece with it, in which case the radially inner end (16') of the spiral spring arrangement (16) is releasably connectable to the spring core bearing (30).

5. Reeling mechanism in accordance with one of the preceding claims, wherein the second thread reel (14) has a hollow truncated cone region (14') of greater average diameter, which merges stepwise at its end having the smaller diameter into a conical region (14") of smaller average diameter, characterized in that the spring housing (49) is only located in the interior of the truncated cone region (14') of larger average diameter.

6. Reeling mechanism in accordance with claim 5, characterized in that bearing means (22, 31) for the second thread reel (14) extend axially through the cone region (14") of smaller average diameter, into the hollow truncated cone region (14') of larger average diameter.

7. Reeling mechanism in accordance with one of the preceding claims, characterized in that the first thread reel (12) tapers towards the belt reel (11) and the second thread reel (14) tapers away from the belt reel (11).

8. Reeling mechanism in accordance with claim 7, characterized in that the first thread reel (12) is of hollow design and the wall (33) of the reeling mechanism housing (28) is axially set back into the so formed hollow chamber (34) that a receiving chamber (35) is provided at the outside for an element (36) providing security against rotation and/or is arranged at the wall (33) of the bearing projection (47) for the rotary journalling of the first thread reel (12).

9. Method of installing a spring driven reeling mechanism for safety belts (17) in motor vehicles, comprising a reeling mechanism housing (28, 28a) and a belt reel (11) having a belt pull-out blocking device (29), wherein the belt reel (11) is rotationally fixedly connected, in particular coaxially and directly connected, to a first thread reel (12) which tapers in the axial direction and has a spiral guide groove (15) at its periphery, wherein the thread reel (12) is rotationally fixedly connected via a flexible thread (13) secured at one end to the thread reel (12) and wound into the guide groove (15), contrary to the winding sense of the safety belt (17) on the belt reel (11), to a further, second thread reel (14) arranged parallel to it in lateral alignment, wherein the second thread reel tapers in the opposite axial direction and has a spiral guide groove (18), with the other end of the thread (13) being secured to the second thread reel, and with the thread being wound into the guide groove (18) of the second guide reel, wherein the second thread reel is biased by a spiral spring arrangement (16) in the winding up direction of the thread (13) onto the second thread reel (14) and of the safety belt (17) onto the belt reel (11), with the two guide grooves (15, 18) being so designed and arranged on the thread reels (12, 14) that the tensioned thread piece (13') connecting the two thread reels (12, 14) merges at least substantially kink-free into the two thread pieces located on the thread reels (12, 14), and wherein the spiral spring arrangement (16) is accommodated at least partially in a hollow cavity (21) of the second thread reel (14), with the cavity being at least partly surrounded by the guide groove (18), characterized in that
- the spiral spring arrangement (16) is introduced into a spring housing (49) and is secured to the latter radially outwardly;
- a spring core bearing (30) is introduced radially inwardly into the spiral spring arrangement (16) and rotationally fixedly connected to the latter;
- the spring core bearing (30) is rotated in the spring tensioning direction until the spiral spring arrangement (16) is tensioned to the maximum amount;
- the force which holds the spiral spring arrangement (16) tensioned is removed after the thread reels (12, 14) together with the thread (13) wound thereon and secured thereto are located in the reeling mechanism housing (28, 28a); and
- the finished reeling mechanism housing (28, 28a) is attached to the reeling mechanism frame (19).

10. Method in accordance with claim 9, characterized in that the finished reeling mechanism housing (28, 28a) is clipped onto the reeling mechanism frame (19).

11. Method in accordance with claim 9 or claim 10, characterized in that
- a cover (28a) of the reeling mechanism housing (28, 28a) is laid into an installation device with its inner side;
- the first thread reel (12) with the thread (13) secured on it is placed onto its rotary bearing (47) in the cover;
- the thread (13) is wound into the guide groove (15) of the first thread reel (12) until the thread reel (12) is fully wound with the thread (13);
- the second thread reel (14) is mounted onto its rotary bearing (22, 31) in the cover (28a);
- the spring housing (49) is mounted with the already installed but not yet tensioned spiral spring arrangement (16) onto the spring core bearing (30) of the second thread reel (14), which is fixedly connected to the second thread reel (14), and is rotationally fixedly connected to the belt reel housing (28, 28a) in that a non-round, central opening (44) of the spring housing is rotationally fixedly placed onto a complementary projection (44) on a shaft-like extension (31) of a hollow spigot (22) fixed to the cover and passing through the hollow spring core bearing (30);
- the spiral spring arrangement (16) is tensioned to its maximum by corresponding rotation of the second thread reel (14);
- the second thread end is secured to the thread reel (14);
- an element (36) providing security against rotation is mounted on the first thread reel (12); and
- the reeling mechanism base plate (28) is mounted onto the cover (28a) and connected to the latter, whereupon the spring housing (49) is clipped onto the base plate (28) in order to provide a secure, rotationally fixed support of the spring housing (49), also independent of the rotationally fixed connection (44, 54) between the cover (28a) and the spring housing (49).

12. Method in accordance with claim 11, characterized in that
- the second thread reel (14) and the spring housing (49) are put together axially and the second thread reel (14) and the spring core bearing (30) are rotationally fixedly coupled together;
- the spiral spring (16) is pretensioned to its maximum;
- the one end of the thread (13) is secured (23) to the second thread reel (14);
- the thread (13) is wound while relaxing the spiral spring arrangement (16), and with guidance through a thread guiding jig, into its guide groove (18) onto the second thread reel (14);
- after the full winding of the second thread reel (14) the thread (13) is fixed to the latter by the thread guiding jig and the other end of the thread (13) is secured (24) to the first thread reel (12);
- the thread is wound off from the second thread reel (14) onto the first thread reel (12), with the spiral spring arrangement (16) being tensioned anew; and
- an element (36) providing security against rotation is attached to the first thread reel (12) after at least extensive winding of the first thread reel (12) and extensive tensioning of the spiral spring arrangement (16).

13. Method in accordance with one of the claims 9 to 11, characterized in that
- the thread (13) is secured to the first thread reel (12) and is wound onto the latter;
- the other end of the thread is subsequently secured to the second thread reel (14);
- the second thread reel (14) is mounted in this state onto the tensioned spiral spring arrangement (16);
- the total arrangement is placed into a reeling mechanism housing (28, 28a); and
- an element (36) providing security against rotation is mounted onto the first thread reel (12) and the force which keeps the spiral spring arrangement (36) tensioned is removed.

## Revendications

1. Enrouleur entraîné par ressort pour ceintures de sécurité (17) pour des véhicules, comportant un carter d'enrouleur (28, 28a) et une bobine de ceinture (11) présentant un verrouillage d'extraction de ceinture (29), qui est reliée de manière solidaire en rotation, en particulier coaxialement et directement avec une première bobine à fil (12) se rétrécissant en direction axiale, comportant une rainure de guidage (15) hélicoïdale sur sa périphérie, ladite bobine à fil étant reliée solidaire en rotation à une seconde bobine à fil (14) parallèle et agencée en alignement latéral, se rétrécissant en direction axiale opposée, comportant une rainure de guidage (18) hélicoïdale, via un fil (13) flexible, enroulé dans la rainure de guidage (15), dans le sens contraire de l'enroulement de la ceinture de sécurité (17) sur la bobine de ceinture (11), et fixé sur une extrémité sur la bobine à fil (12), l'autre extrémité du fil (13) étant fixée sur ladite bobine à fil (14) sur laquelle le fil (13) est enroulé et laquelle est précontrainte par un agencement de ressort hélicoïdal (16) en direction d'enroulement du fil (13) sur la seconde bobine à fil (14) et d'enroulement de la ceinture de sécurité (17) sur la bobine de ceinture (11), les deux rainures de guidage (15, 18) étant réalisées et agencées de telle sorte sur les bobines à fil (12, 14) que le morceau de fil (13') tendu reliant les deux bobines à fil (12, 14) se transforme au moins sensiblement sans coude en deux morceaux de fils se trouvant sur les bobines à fil (12, 14), et l'agencement de ressort hélicoïdal (16) se trouvant au moins partiellement dans une cavité (21) de la seconde bobine à fil (14) qui est au moins partiellement entourée par la rainure de guidage (18), caractérisé en ce que l'agencement de ressort hélicoïdal (16) est relié solidaire en rotation radialement à l'extérieur avec le carter d'enrouleur (28, 28a) et radialement à l'intérieur avec la seconde bobine à fil (14).

2. Enrouleur selon la revendication 1, caractérisé en ce que l'agencement de ressort hélicoïdal (16) est logé dans un carter de ressort (49).

3. Enrouleur selon la revendication 2, caractérisé en ce que le carter de ressort (49) est susceptible d'être mis en place axialement dans le carter d'enrouleur (28, 28a) et d'être fixé à celui-ci.

4. Enrouleur selon l'une ou l'autre des revendications 2 et 3, caractérisé en ce que dans le carter de ressort (49), un noyau de montage de ressort (30) est agencé rotatif au centre, sur lequel l'extrémité (16') radialement intérieure de l'agencement de ressort hélicoïdal (16) est agencée de manière solidaire en rotation, et qui, à la mise en place du carter de ressort (49) dans le carter d'enrouleur (28) ou au montage axial de la seconde bobine à fil (14), est susceptible d'être accouplé solidairement en rotation avec la seconde bobine à fil (14) ou bien est relié de manière solidaire à la seconde bobine à fil (14), en particulier d'une seule pièce avec cette dernière, auquel cas l'extrémité (16') radialement intérieure de l'agencement de ressort hélicoïdal (16) est susceptible d'être reliée de manière détachable avec le noyau de montage de ressort (30).

5. Enrouleur selon l'une quelconque des revendications précédentes, la seconde bobine à fil (14) présentant une zone tronconique (14') creuse de plus grand diamètre moyen, qui se transforme, à son extrémité de petit diamètre, brusquement en une zone conique (14") de diamètre moyen inférieur, caractérisé en ce que le carter de ressort (49) se trouve seulement à l'intérieur de la zone tronconique (14') de plus grand diamètre moyen.

6. Enrouleur selon la revendication 5, caractérisé en ce que des moyens formant palier (22, 31) pour la seconde bobine à fil (14) s'étendent axialement à travers la zone conique (14") de plus petit diamètre moyen jusque dans la zone tronconique (14') creuse de plus grand diamètre moyen.

7. Enrouleur selon l'une quelconque des revendications précédentes, caractérisé en ce que la première bobine à fil (12) se rétrécit vers la bobine de ceinture (11) et la seconde bobine à fil (14) se rétrécit en éloignement de la bobine de ceinture (11).

8. Enrouleur selon la revendication 7, caractérisé en ce que la première bobine à fil (12) est réalisée creuse et en ce que la paroi (33) du carter d'enrouleur (28) revient axialement dans la cavité (34) ainsi formée de telle sorte qu'il est formé à l'extérieur un espace de réception (35) pour un élément antirotation (36), et/ou en ce que sur la paroi (33) est agencée la saillie de palier (47) pour le logement en rotation de la première bobine à fil (12).

9. Procédé de montage d'un enrouleur entraîné par ressort pour ceintures de sécurité (17) pour des véhicules, comportant un carter d'enrouleur (28, 28a) et une bobine de ceinture (11) présentant un verrouillage d'extraction de ceinture (29) qui est reliée de manière solidaire en rotation, en particulier coaxialement et directement avec une première bobine à fil (12) se rétrécissant en direction axiale comportant une rainure de guidage (15) hélicoïdale sur sa périphérie, laquelle est reliée solidaire en rotation à une autre seconde bobine à fil (14) parallèle et agencée en alignement latéral, se rétrécissant en direction axiale opposée, comportant une rainure de guidage (18) hélicoïdale, via un fil (13) flexible, enroulé dans la rainure de guidage (15), dans le sens contraire de l'enroulement de la ceinture de sécurité (17) sur la bobine de ceinture (11), et fixé avec une extrémité sur la bobine à fil (12), l'autre extrémité du fil (13) étant fixée sur ladite seconde bobine à fil (14) sur laquelle le fil (13) est enroulé et laquelle est précontrainte par un agencement de ressort hélicoïdal (16) en direction d'enroulement du fil (13) sur la seconde bobine à fil (14) et d'enroulement de la ceinture de sécurité (17) sur la bobine de ceinture (11), les deux rainures de guidage (15, 18) étant réalisées et agencées de telle sorte sur les bobines à fil (12, 14) que le morceau de fil (13') tendu reliant les deux bobines à fil (12, 14) se transforme au moins sensiblement sans coude en deux morceaux de fils se trouvant sur les bobines à fil (12, 14), et l'agencement de ressort hélicoïdal (16) se trouvant au moins partiellement dans une cavité (21) de la seconde bobine à fil (14) qui est au moins partiellement entourée par la rainure de guidage (18), caractérisé en ce que :
- l'agencement de ressort hélicoïdal (16) est monté dans un carter de ressort (49) et fixé radialement à l'extérieur sur celui-ci,
- un noyau de montage de ressort (30) est monté radialement à l'intérieur dans l'agencement de ressort hélicoïdal (16) et relié solidaire en rotation avec celui-ci,
- le noyau de montage de ressort (30) est tourné en direction de tensionnement du ressort jusqu'à ce que l'agencement de ressort hélicoïdal (16) soit tendu au maximum,
- la force maintenant tendue l'agencement de ressort hélicoïdal (16) est annulée après que les bobines à fil (12, 14), avec le fil enroulé et fixé sur celles-ci, se trouvent dans le carter d'enrouleur (28, 28a), et
- le carter d'enrouleur (28, 28a) terminé est monté sur le cadre d'enrouleur (19).

10. Procédé selon la revendication 9, caractérisé en ce que le carter d'enrouleur (28, 28a) terminé est clipsé sur le cadre d'enrouleur (19).

11. Procédé selon l'une ou l'autre des revendications 9 et 10, caractérisé en ce que :
- un couvercle (28a) du carter d'enrouleur (28, 28a) est inséré avec sa face intérieure dans un dispositif de montage,
- la première bobine à fil (12) avec le fil (13) fixé sur celle-ci est mise en place sur son coussinet de pivotement (47) dans le couvercle,
- le fil (13) est enroulé dans la rainure de guidage (15) de la première bobine à fil (12) jusqu'à ce que la bobine à fil (12) soit totalement embobinée par le fil (13),
- la seconde bobine à fil (14) est posée sur son coussinet de pivotement (22, 31) dans le couvercle (28a),
- le carter de ressort (49) avec agencement de ressort hélicoïdal (16) déjà monté mais pas encore tendu est posé sur le noyau de montage de ressort (30) de la seconde bobine à fil (14), relié de manière solidaire avec ladite seconde bobine à fil (14), et relié solidaire en rotation avec le carter d'enrouleur (28, 28a) par le fait qu'une ouverture centrale non circulaire (44) du carter de ressort (49) se pose sur une saillie (44) complémentaire sur un prolongement en forme de fût traversant le noyau de montage de ressort (30) creux, d'un tourillon creux (22) solidaire du couvercle,
- l'agencement de ressort hélicoïdal (16) est tendu au maximum par rotation correspondante de la seconde bobine à fil (14) ;
- la seconde extrémité de fil est fixée sur la bobine à fil (14),
- un élément antirotation (36) est monté sur la première bobine à fil (12), et
- la plaque de base (28) de l'enrouleur est posée sur le couvercle (28a) et reliée à celui-ci, après quoi le carter de ressort (49) est clipsé avec la plaque de base (28) pour réaliser un appui sûr solidaire en rotation du carter de ressort (49), aussi indépendamment de la liaison solidaire en rotation (44, 54) entre le couvercle (28a) et le carter de ressort (49).

12. Procédé selon la revendication 11, caractérisé en ce que :
- la seconde bobine à fil (14) et le carter de ressort (49) sont réunis axialement et la seconde bobine à fil (14) et le noyau de montage de ressort (30) sont accouplés l'un à l'autre solidaire en rotation,
- le ressort hélicoïdal (16) est tendu au maximum,
- l'une des extrémités du fil (13) est fixée (23) sur la seconde bobine à fil (14),
- le fil (13) est enroulé sur la seconde bobine à fil (14), sous détente de l'agencement de ressort hélicoïdal (16) et sous guidage par un calibre de guidage de fil dans rainure de guidage (18) de celui-ci,
- après avoir entièrement embobiné la seconde bobine à fil (14), le fil (13) est fixé sur celle-ci au moyen du calibre de guidage de fil, et l'autre extrémité du fil (13) est fixée (24) sur la première bobine à fil (12),
- le fil de la seconde bobine à fil (14) est déroulé et enroulé sur la première bobine à fil (12), l'agencement de ressort hélicoïdal étant de nouveau tendu, et
- après avoir au moins amplement embobiné la première bobine à fil (12) et amplement tendu l'agencement de ressort hélicoïdal (16), un élément antirotation (36) est monté sur la première bobine à fil (12).

13. Procédé selon l'une quelconque des revendications 9 à 11, caractérisé en ce que :
- le fil (13) est fixé sur la première bobine à fil (12) et enroulé sur celle-ci,
- l'autre extrémité du fil est ensuite fixée sur la seconde bobine à fil (14),
- la seconde bobine à fil (14) est posée dans cet état sur l'agencement de ressort hélicoïdal (16),
- l'ensemble est agencé sur un carter d'enrouleur (28, 28a), et
- un élément antirotation (36) est monté sur la première bobine à fil (12) et la force qui maintient tendu l'agencement de ressort hélicoïdal (16) est supprimée.
